# EUROPÄISCHE PATENTSCHRIFT

(11) **EP 0 473 001 B1**
(45) Veröffentlichungstag und Bekanntmachung des Hinweises auf die Patenterteilung: **17.11.1994**
(21) Anmeldenummer: 91113581.2
(22) Anmeldetag: 13.08.1991
(51) Int. Cl.: B67D 1/14, G05D 7/01

(54) **Anordnung zur Durchflussmengenregelung und zum Öffnen eines Durchflusskanals für unter Druck stehende Flüssigkeiten**
Device for controlling of fluid flow and for opening a conduit for pressurized liquids
Dispositif de régulation de débit de fluide et d'ouverture d'un conduit pour liquides sous pression

(30) Priorität: 16.08.1990 DE 4025981
(43) Veröffentlichungstag der Anmeldung: 04.03.1992
(73) Patentinhaber: Bosch-Siemens Hausgeräte GmbH, 81669 München (DE); THE COCA-COLA COMPANY, Atlanta, Georgia 30301 (US)
(72) Erfinder: Raab, Alfred, Dipl.-Ing. (FH), W-7080 Attenhofen (DE); Giefer, Heinz-Werner, Dipl.-Ing., W-7927 Sontheim (DE); Eichler, Walter, Dipl.-Ing. (FH), W-7929 Gerstetten (DE)

(56) Entgegenhaltungen:
- DE-A- 2 559 703
- US-A- 2 684 081
- US-A- 2 960 109
- US-A- 3 372 841
- US-A- 4 867 198

## Beschreibung

Die Erfindung betrifft eine Anordnung gemäß Oberbegriff des Anspruchs 1 zur Durchflußmengenregelung und zum Öffnen eines Durchflußkanals für unter Druck stehende Flüssigkeiten, insbesondere karbonisiertes Wasser, bestehend aus einem durch eine Betätigungseinrichtung steuerbaren Auslaß-Absperrventil und einem einen konstanten Durchlfuß unabhängig vom Druck der zugeführten Flüssigkeit steuernden Durchflußmengen-Regelventil, innerhalb eines Gehäuses mit einem ersten, zweiten und dritten Gehäuseteil, die in Durchflußrichtung unmittelbar aufeinanderfolgend angeordnet sind, wobei das zweite der drei Gehäuseteile sowohl einen Bestandteil des Auslaß-Absperrventils als auch einen Bestandteil des Durchflußmengen-Regelventils bildet und den Durchflußkanal zwischen Auslaß-Absperrventil und Durchflußmengen-Regelventil aufweist.

Eine derartige Anordnung dient zur Konstanthaltung der Durchflußmengen von Flüssigkeiten je Zeiteinheit, um in Verbindung mit einer zeitlichen Begrenzung der Flüssigkeitsabgabe hohe Genauigkeit des auszugebenden Flüssigkeitsvolumens zu erzielen. Beispielsweise in Getränkeautomaten, durch die aus karbonisiertem Wasser einerseits und Getränkekonzentraten andererseits Erfrischungsgetränke gemischt und bereitgestellt werden, wird gefordert, daß das vorgegebene Mischungsverhältnis ihrer beiden Komponenten möglichst exakt eingehalten wird, da ansonsten eine Geschmacksverschiebung die Qualität des Erfrischungsgetränks stark beeinflussen würde.

Für die in relativ kleinen Mengen zuzumischenden Getränkekonzentrate wird zumeist eine Volumendosierung angewendet und damit auch eine hohe Volumenausgabegenauigkeit erreicht.

Um auch die erforderliche Volumen-Ausgabegenauigkeit bezüglich des karbonisierten Wassers zu erreichen und damit das gewünschte Mischungsverhältnis zu erzielen, ist es erforderlich, die beiden das Volumen bestimmenden Komponenten, nämlich die Durchflußmenge und die Zuflußzeit möglichst genau festzulegen. Die Durchflußzeit ist relativ gut über Auf-Zu-Ventile zu steuern, wenngleich die Schließ- und Öffnungsvorgänge bei relativ kurzen Ausgabezeiten Störgrößen darstellen.

Die Beherrschung der Durchflußmenge ist wesentlich problematischer. Kurzfristig auftretende Druckunterschiede und Temperaturunterschiede müssen ebenso Berücksichtigung finden wie bei begasten Flüssigkeiten die Tatsache, daß bei Druckabfall und durch Strömungsverwirbelungen sowie bei Erwärmung im Bereich eines Durchflußmengen-Regelventils das Flüssigkeits-Gas-Gemisch zum Entgasen neigt.

In Getränkeautomaten wird das karbonisierte Wasser in einem sogenannten Karbonisator aus Wasser und CO₂-Gas gemischt und unter Druck gekühlt bis in den Bereich des Gefrierpunkts bevorratet. Bei der Entnahme von karbonisiertem Wasser treten erhebliche Druckunterschiede auf. Die Ausgabe erfolgt in unter atmosphärischem, also gleichbleibendem Druck stehenden Bereiche. Das Durchflußmengen-Regelventil ist bei längeren Ruhezeiten auf Raumtemperatur erwärmt, durch Ausgabe des karbonisierten Wassers wird es bis auf unter 0°C abgekühlt. An ein derartiges Regelventil sind aber hohe Anforderungen gerichtet. Als wirtschaftlich herzustellenden Gegenstand soll es aber auch preisgünstig sein.

Aus der DE-A- 34 30 953 ist bereits eine gattungsgemäße Anordnung zum Mischen von Flüssigkeiten mit einem druckunabhängigen Durchfluß-Regelventil bekannt. Das Durchfluß-Regelventil weist einen mit Rückstellkraft einer Feder beaufschlagten verschieblichen Kolben in einer zylinderförmigen Kolbenkammer auf.

Das Durchflußmedium strömt durch eine zentrale Bohrung im Kolben zu Auslaßöffnungen im Zylinder, welche durch die Kolben-Regelkante teilweise abgedeckt werden. Die Feder bringt die Gegenkraft zum Mediumsdruck auf und stellt den Arbeitsdruck ein. Zwischen Kolben und Zylinder ist ein Spalt vorzusehen, der Dichtfunktion hat. Der Spalt ist daher klein und eng toleriert. Verschmutzungen zwischen Kolben und Zylinder stören die Funktion der Regelung und führen zu falschen Ausgaben beziehungsweise zum Ausfall der Anordnung. Zudem birgt der relative Komplexe Aufbau des bekannten Regelventils mit einer Mehrzahl, auch sich bewegender Einzelkomponenten die Gefahr eins Ausfalls der Gesamtanordnung in sich, wenn bereits eine Einzelkomponente in ihrer Funktionsfähigkeit beeinträchtigt ist.

Im Hinblick auf diesen Sachverhalt ist es Aufgabe der vorliegenden Erfindung, eine kompakt ausgebildete Anordnung der eingangs genannten Art anzugeben, die nur eine geringe Anzahl sich bewegender Einzelkomponenten aufweist.

Eine Anordnung, die diesen Anforderungen genügt, ist erfindungsgemäß dadurch gekennzeichnet, daß das Auslaß-Absperrventil durch das erste und zweite Gehäuseteil sowie durch die Betätigungseinrichtung gebildet ist, die aus einer zwischen beiden Gehäuseteilen sandwichartig eingespannten Klappe mit einem Verschlußteil und einem mit der Klappe verbundenen Betätigungshebel besteht, und daß in das zweite Gehäuseteil ein mit dem Verschlußteil der Klappe zusammenwirkender Ventilsitz integriert ist, und daß zwischen dem zweiten und dritten Gehäuseteil senkrecht zu der Richtung des zufließenden Wassers eine Membrane mit einer Bohrung eingespannt ist, daß im dritten Gehäuseteil im Bereich der Membranbohrung ein Stift in der Weise angeordnet ist, daß in das zweite Gehäuseteil einströmendes Wasser durch die Bohrung der Membrane tritt und diese in Richtung des Stifts drückt.

Die Erfindung zeichnet sich durch eine Mehrzahl von Vorteilen aus. Die Anordnung weist nur drei Gehäuseteile auf, die zugleich den Körper der Anordnung bilden. Darüberhinaus weist die Anordnung lediglich zwei bewegliche Teile auf, nämlich eine Membrane im Durchflußmengen-Regelventil und eine die Betätigungseinrichtung mitbildende Klappe im Auslaß-Absperrventil auf.

Die Membrane ist zudem anders als ein Kolben beim Stand der Technik nicht frei beweglich, sondern im Körper der Anordnung eingespannt. Auch die Klappe des Auslaßventils ist im Körper der Anordnung eingespannt.

Die Membrane nutzt sich praktisch nicht ab und gewährleistet damit eine hohe Lebensdauer der Anordnung. Die relativ geringe Masse der Membrane bewirkt eine nur kurze Ansprech- und Einschwingzeit. Auch die Klappe nutzt sich praktisch nicht ab und gewährleistet wie die Membrane eine hohe Lebensdauer der Anordnung.

Die Anordnung läßt sich kompakt und aufgrund des einfachen Aufbaus kostengünstig ausgestalten. Die kompakte Bauweise ergibt sich dadurch, daß die gesamte Anordnung aus nur drei Gehäuseteilen besteht, in die das Auslaß-Absperrventil mit der vorstehend genannten Klappe und das Durchflußmengen-Regelventil mit der vorstehend genannten Membrane und einem Stift integriert sind.

Das Durchflußmengen-Regelventil ist in Durchflußrichtung dem Auslaß-Absperrventil unmittelbar nachgeordnet. Eine nach diesen Merkmalen der Erfindung aufgebaute Anordnung folgt dem Konzept, unterschiedlichen Funktionsanforderungen unterschiedliche Funktionseinheiten zuzuordnen und diese möglichst funktionsnah zueinander anzuordnen. Eine Funktionsanforderung ist dadurch gegeben, daß die durch die Zeitsteuerung vorgegebene Öffnungszeit des Ausgabeventils möglichst exakt realisiert wird. Aus diesem Grunde ist ein Auslaß-Absperrventil angeordnet, welches eben dieser Aufgabe in hervorragendem Maße gerecht werden kann. Für die Durchflußmengen-Regelung ist diese Baueinheit jedoch nicht verantwortlich. Dazu ist das einen konstanten Durchfluß unabhängig vom Druck der Zugeführten Flüssigkeit steuernde Mengen-Regelventil angeordnet. Dieses wiederum kann der ihm gestellten Aufgabe in hervorragendem Maße gerecht werden. Es ist aber auch wesentlich, daß beide Funktionseinheiten in unmittelbarer Nachbarschaft angeordnet sind, da somit weitestgehend ein unkontrolliertes Ausfließen der Flüssigkeit während der Schaltphasen des Auslaß-Absperrventils vermieden wird.

Das Auslaß-Absperrventil ist gemäß der Erfindung durch das erste und zweite Gehäuseteil sowie durch die Betätigungseinrichtung gebildet, die aus einer zwischen beiden Gehäuseteilen sandwichartig eingespannten Klappe mit einem Verschlußteil und einem mit der Klappe verbundenen Betätigungshebel besteht, und daß in das zweite Gehäuseteil ein mit dem Verschlußteil der Klappe zusammenwirkender Ventilsitz integriert ist. Weiterhin ist gemäß der Erfindung zwischen dem zweiten und dritten Gehäuseteil senkrecht zu der Richtung des zufließenden Wassers eine Membrane mit einer Bohrung eingespannt, daß im dritten Gehäuseteil im Bereich der Membranbohrung ein Stift in der Weise angeordnet ist, daß in das zweite Gehäuseteil einströmendes Wasser durch die Bohrung der Membrane tritt und diese in Richtung des Stifts drückt.

Damit läßt sich eine druckunabhängige Durchflußmengenregelung in einfacher Weise und nur mit einem beweglichen Teil der Membrane realisieren.

Insbesondere ist das Verschlußteil der Klappe im Bereich des Durchflußweges auf der dem zufließenden Wasser zugewandten Seite ballenförmig ausgebildet. Diese Ausformung des Verschlußteils bewirkt, daß das Wasser, sofern das Ventil nicht mittels der Betätigungseinrichtung betätigt wird, fest gegen die Klappe drückt und den Durchflußkanal gut abdichtet. Weiter bewirkt diese Ausformung des Verschlußteils, daß die Klappe im unmittelbaren Anschluß an eine Betätigung rasch in ihre Ruhestellung zurückkehrt.

Dabei ist vorzugsweise die Klappe mit dem Verschlußteil innerhalb eines zwischen dem ersten und zweiten Gehäuseteil eingespannten Rings angeordnet und besteht aus einem radial verlaufenden Steg, der an einer Seite mit dem Ring verbunden ist und sich bis zu dem im Bereich des Durchflußweges, im Mittelpunkt des Rings angeordneten Verschlußteil erstreckt. Der Betätigungshebel ist vorzugsweise in Verlängerung des Stegs mit dem Ring verbunden.

Diese Ausgestaltungen der Betätigungseinrichtung zeichnen sich durch einen einfachen konstruktiven und zugleich robusten Aufbau aus, der herstellungstechnisch in einfacher Weise und kostengünstig zu realisieren ist.

Nach weiteren vorteilhaften Ausführungsformen der Erfindung ist der Stift als justierbare Schraube ausgebildet und weist einen die Verstellbewegung in Richtung der Membrane begrenzenden Anschlag auf. Dieser verhindert, daß der Stift die Membrane selbst bei maximalem Druck des zufließenden Wassers berührt und damit möglicherweise deren Funktionsfähigkeit einschränkt oder die Membrane zerstört.

Als vorteilhaft erweist es sich ferner, daß der Stift im Bereich der Bohrung der Membrane eine kegelförmige Spitze, insbesondere mit einem Winkel von 90 aufweist. Bei dieser Ausgestaltung des Stiftes ist der Einfluß einer möglichen CO2-Imprägnierung des Wassers und die Abhängigkeit von der Temperatur so gering, daß eine vorgegebene Toleranz der Ausgabemenge eingehalten wird.

Als strömungsmechanisch besonders vorteilhaft erweist sich eine Ausführungsform, bei der die Membrane kreisförmig ausgebildet ist und die Bohrung zentral in der Membrane angeordnet ist. Dabei ist die Membrane in einem vorgegebenen Abstand von ihrer kreisförmigen Außenkante kreislinienförmig gelagert.

Weitere vorteilhafte Ausführungsformen der Erfindung sind dadurch gekennzeichnet, daß das dritte Gehäuseteil eine Auslaßöfnung aufweist, die in ein Auslaßrohr mündet, wobei das Auslaßrohr seitlich versetzt und parallel zur Zuflußrichtung des Wassers angeordnet ist oder gegenüber der Zuflußrichtung des Wassers um 90 abgewinkelt ist. Insbesondere hat das Auslaßrohr einen größeren Durchmesser als die Auslaßöffnung. Die Umlenkung der Wasserflußrichtung verzögert die Ausflußgeschwindigkeit und reduziert die Geräuschbildung. Diese Ausgestaltungen bewirken weiterhin, daß das Wasser als gebündelter Strahl das Ventil verläßt.

Nach den Merkmalen der Erfindung ausgestaltete Ausführungsbeispiele werden anhand der Figuren im folgenden näher beschrieben.

Es zeigt
- Figur 1: einen Schnitt durch die erfindungsgemäße Anordnung und
- Figur 2: einen Schnitt durch einen Teil der Anordnung nach Figur 1, der ein Durchflußmengen-Regelventil bildet.

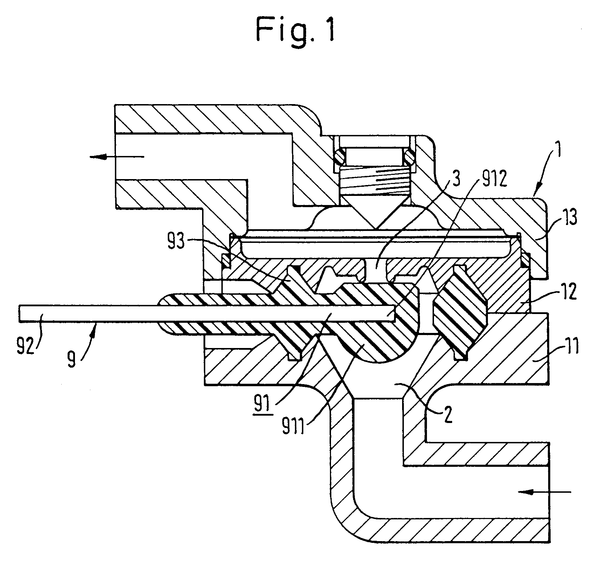

Die in Figur 1 dargestellte Anordnung gemäß der Erfindung dient der Druchflußmengenregelung und dem Öffnen bzw. Schließen eines Druchflußkanals für unter Druck stehende Flüssigkeiten, insbesondere für karbonisiertes Wasser.
Die Anordnung gemäß der Erfindung, wie sie zweckmäßigerweise zur Ausgabe von karbonisiertem Wasser aus einem Karbonisator eines Getränkeautomaten zur Anwendung kommt, durch den aus dem karbonisierten Wasser und zuzumischenden Getränkekonzentraten Erfrischungsgetränke zubereitet werden, besteht aus einem Auslaß-Absperrventil 2 und aus einem Durchflußmengen-Regelventil 3. Das Durchflußmengen-Regelventil 3 ist dem Auslaß-Absperrventil 2 in Durchflußrichtung unmittelbar nachgeordnet.
Die Durchflußrichtung ist durch die in Figur 1 eingezeichneten Pfeile markiert.
Das Gehäuse 1 besteht aus drei Gehäuseteilen 11, 12 und 13, die in Durchflußrichtung unmittelbar aufeinanderfolgend angeordnet sind. Das zweite Gehäuseteil 12 bildet sowohl einen Bestandteil des Auslaß-Absperrventils 2 als auch einen Bestandteil des Durchvlußmengen-Regelventils 3, wobei der Durchflußkanal zwischen Auslaß-Absperrventil 2 und Durchflußmengen-Regelventil 3 in das zweite Gehäuseteil 12 integriert ist.

Das Auslaß-Absperrventil 2 besteht aus dem ersten und zweiten Gehäuseteil 11, 12 und weist eine Betätigungseinrichtung 9 auf. Diese besteht aus einer zwischen beiden Gehäuseteilen 11, 12 sandwichartig eingespannten Klappe 91 mit einem Verschlußteil 911 und einem mit der Klappe 91 verbundenen Betätigungshebel 92.

Das Verschlußteil 911 der Klappe 91 ist im Bereich des Durchflußweges auf der dem zufließenden Wasser zugewandten Seite vorzugsweise ballenförmig ausgebildet. Diese Ausformung des Verschlußteils 911 bewirkt, daß das Wasser, sofern das Ventil nicht mittels der Betätigungseinrichtung 9 geöffnet wird, fest gegen die Klappe 91 drückt, die dann ihrerseits fest gegen das zweite Gehäuseteil 12 im Bereich eines in das Gehäuseteil 12 integrierten Ventilsitzes 123 drückt. Die Klappe 91 dichtet so mit ihrem Verschlußteil 911 den Durchflußkanal ab.

Die Klappe 91 mit dem Verschlußteil 911 ist innerhalb eines zwischen dem ersten und zweiten Gehäuseteils 11, 12 eingespannten Rings 93 angeordnet und besteht aus einem radial verlaufenden Steg 912, der an einer Seite mit dem Ring 93 verbunden ist und sich bis zu dem im Bereich des Durchflußkanals, im Mittelpunkt des Rings 93 angeordneten Veschlußteil 911 erstreckt. Der Ring 93 besteht aus Dichtungsmaterial.

Der Betätigungshebel 92 ist in Verlängerung des Stegs 912 mit dem Ring 93 verbunden. Der Betätigungshebel 92 ist mit dem Steg 912 in der Weise verbunden, daß eine auf den Betätigungshebel 92 in der Figur 1 von unten nach oben wirkende Kraft den Steg 912 nach unten gegen die Durchflußrichtung des Wassers führt und so den Durchflußkanal freigibt. Der Betätigungshebel 92 wird vorzugsweise von einer Steuernocke oder elektromagnetisch betätigt.

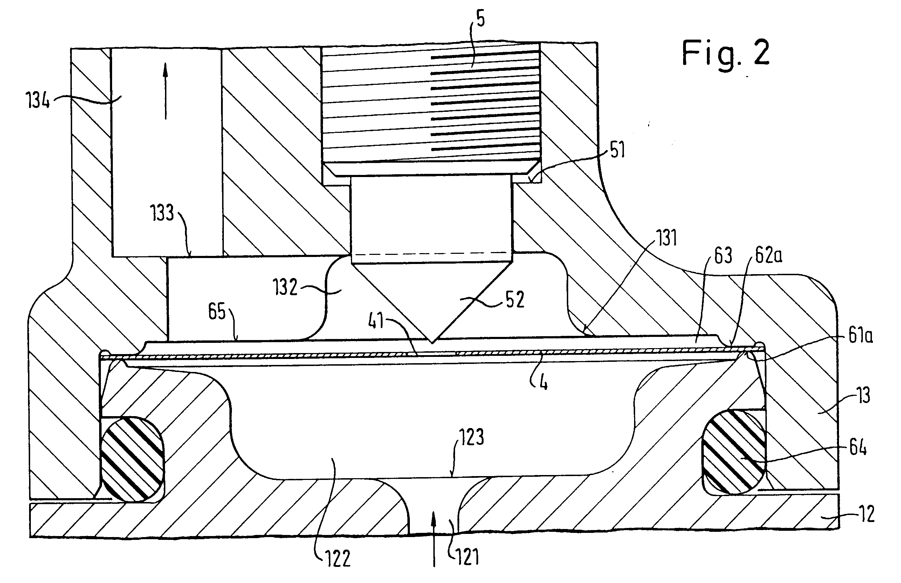

Das in Durchflußrichtung dem Auslaß-Absperrventil 2 unmittelbar nachgeordnete Durchflußmengen-Regelventil 3 wird unter anderem von dem zweiten und dritten Gehäuseteil 12 und 13 gebildet. Eine Ausführungsform eines solchen Durchflußmengen-Regelventils 3 ist in Figur 2 dargestellt.

Der Innenraum des in der Figur 2 dargestellten Ventils verbreitet sich ausgehend von einer Einlaßöffnung 121 zu einem Vorraum 122. Der Übergang von der Einlaßöffnung 121 zu dem Vorraum 122, der zumindest im Bereich einer Membrane 4 kreisförmig ausgebildet ist, sowie die Wandung des Vorraums weisen in dem in der Figur dargestellten Ausführungsbeispiel eine geschwungene Form auf. Eine solche Form ohne Volumensprung verhindert, daß nennenswerte Mengen des zunächst im Wasser gebundenen Gases ausschlagen.

Die Membrane 4 ist senkrecht zu der Richtung(Pfeil unten in Figur 2) des zufließenden Wassers angeordnet und weist eine vorzugsweise zentrale Bohrung 41 auf, deren Durchmesser vorzugs- weise kleiner oder gleich dem Durchmesser der Einlaßöffnung 121 ist. Der Vorraum 122 bildet auf seiner der Einlaßöffnung abgewandten Seite einen Raum 132, in den ein Stift 5 ragt. Der Stift 5 befindet sich in der Verlängerung der von der Einlaßöffnung 121 zu Bohrung 41 der Membrane 4 führenden Strecke.

Der Stift 5 weist im Bereich der Bohrung der Membrane vorzugsweise eine kegelförmige Spitze 52 auf, die einen Winkel von 90° bildet. Er kann senkrecht zur Membrane verstellbar gelagert und als justierbare Schraube ausgebildet sein. Die Verstellbewegung in Richtung der Membrane wird durch einen Anschlag 51 begrenzt.
Mit dem Stift wird der Arbeitspunkt des Ventils eingestellt. Der Arbeitspunkt wird für einen vorgegebenen Abstand zwischen der (belasteten) Membrane und seiner insbesondere kegelförmigen Oberfläche im Bereich der Membranenbohrung im wesentlichen durch den Durchmesser der Membranenbohrung, die Steifigkeit der Membrane und die Lagerung der Membrane im Ventilinnenraum bestimmt. Mit der Justierung des Stiftes 5 läßt sich der Regelbereich des Ventils nur in engen Grenzen verändern; die Justierung dient hauptsächlich dazu, etwa vorhandene Fertigungstoleranzen auszugleichen.

Die Membrane 4 ist in einem vorgegebenen Abstand von ihrer kreisförmigen Außenkante kreislinienförmig gelagert. Die kreislinien- oder ringförmige Lagerung der Membrane wird zum einen durch das in Figur 2 unten dargestellte zweite Gehäuseteil 12 und zum anderen durch das in der Figur 2 oben dargestellte dritte Gehäuseteil 13 gebildet. Die Membrane 4 ist durch beide Gehäuseteile 12, 13 eingespannt, wobei die Gehäuseteile im Bereich der Membranlagerung einen Freiraum 63 für die kreisförmigen Außenkante der Membrane bilden. Drückt einströmendes Wasser gegen die Membrane, bewegt sich diese im Bereich ihrer zentralen Bohrung gegen den Stift 5 und bewegt sich in dem durch die Gehäuseteile 12 und 13 gebildeten Freiraum 63 (in der Figur).

Beide Gehäuseteile 12, 13 sind im Bereich der Membranlagerung so ausgeformt, daß sie die Bewegung der Membrane unter dem Einfluß der an der Membrane auftretenden Druckänderungen unterstützen. Beispielsweise weist das zweite Gehäuseteil 12 im Bereich der Membranlagerung am Scheitelpunkt seiner Außenwandung 61a, die zugleich eine Wandung des Freiraums 63 bildet, die in der Figur darstellte abgerundete Form auf. Eine korrespondierende abgerundete Form weist auch das dritte Gehäuseteil 13 an der der Ventilmitte zugewandten Seite einer horizontalen Membranauflage 62a auf.

Bei Überschreiten eines vorgegebenen Drucks des einströmenden Wassers stützt sich die Membrane 4 auf ein Auflager 131 ab, das an der der Einlaßöffnung 121 abgewandten Seite der Membrane 4 angeordnet ist. Damit erhöht sich die Federsteifigkeit der Membrane 4; ihre plastische Verformung, die die Funktionsfähigkeit einschränken bzw. aufheben würde, wird vermieden. Zugleich wird der Regelbereich des Ventils erweitert.

Die Vorraum 122 des Durchflußmengen-Regelventil erstreckt sich auf die der Einlaßöffnung abgewandte Seite der Membrane 4 und bildet einen in eine Auslaßöffnung 133 mündenden Raum 132. In der Mitte dieses Raums 132 befindet sich der Stift 5.

Der Raum 132 bildet unmittelbar an der Membrane 4 einen horizontalen scheibenförmigen Bereich 65, der nach unten durch die Membrane in ihrer Ruhestellung und nach oben durch das Auflager 131 begrenzt wird. Die Höhe des Bereichs 65 entspricht der Membrandurchbiegung bei dem vorgegebenen Solldruck. Der durch den Bereich 65 gebildete Raum ermöglicht, daß durch die pumpartige Bewegung der Membrane 4 bei Druckänderungen kleine Schmutzteilchen aus dem Wasser ausgespült werden. Der Raum 132 nimmt das durch die Bohrung 41 der Membrane 4 und die Spitze des Stiftes 5 strömende Wasser auf und führt es zum Auslauf. Der Raum ist so dimensioniert, daß sich ein vorgegebener Rückstau des Wassers bildet und dabei Gasblasen, die durch aus dem Wasser ausfallendes Gas gebildet werden, mit aufgenommen werden.

Bei der in Figur 2 dargestellten Ausführungsform ist die Auslaßöffnung 133 parallel zur Membrane 4 im Raum 132 angeordnet. Nach einer weiteren, zeichnerisch nicht dargestellten Ausführungsform ist die Auslaßöffnung 133 an einer Seitenwand des Raums 132 in etwa senkrecht zur Membrane 4 angeordnet.

Die Auslaßöffnung 133 mündet in ein Auslaßrohr 134, das seitlich versetzt und parallel zur Zuflußrichtung des Wassers angeordnet ist. Das Auslaßrohr 134 kann nach einer weiteren, zeichnerisch nicht dargestellten Ausführungsform auch senkrecht zur Zuflußrichtung des Wassers, also parallel zur Membrane 4 angeordnet sein.

Die Auslaßöffnung 133 mündet in ein Auslaßrohr 134, das vorzugsweise einen gegenüber der Auslaßöffnung 133 größeren Durchmesser aufweist. Die Engstelle, die durch die Auslaßöffnung 133 gebildet wird, sowie die Umlenkung der Wasserflußrichtung verzögern den Wasseraustritt und reduzieren die Ausflußgeschwindigkeit. Dies bewirkt auch eine verminderte Geräuschentwicklung des ausfließenden Wassers.

Die beschriebene Verhältnis der Durchmesser von Auslaßöffnung 133 und Auslaßrohr 134 bewirken; daß der austretende, gebremste Wasserstrahl gebündelt das Auslaßrohr 134 in der gesamten Breite ausfüllt und ein Versprühen des austretenden Strahls vermieden wird.

Die Membrane 4 übernimmt die Funktion des Kolbens mit der Druckfeder beim Stand der Technik. Beim Durchlaßmengen-Regelventil der erfindungsgemäßen Anordnung erfolgt die Regelung durch einen Ringspalt zwischen der Membranbohrung 41 und der kegelförmigen Fläche des Stifts 5. Der Druck des in den Ventilinnenraum einströmenden Wassers bewegt die Membrane 4 in Richtung der Kegelfäche des Stifts 5 und stellt damit, abhängig von dem Wasserdruck und der Federkraft der Membrane 4, den Ringspalt ein. Dieser bildet die Öffnungsfläche für das Wasser.
Der Regelungsprozeß ist auch von dem Durchmesser der Membranbohrung 41 abhängig. Die Regelung setzt erst dann ein, wenn die Öffnungsfläche durch den Ringspalt kleiner ist als die Fläche der Membranbohrung.

Beide Gehäuseteile 12, 13 sind zunächst im Bereich der ringförmigen Lagerung der fest eingespannten Membrane gegeneinander abgedichtet. Weiter werden beide Gehäuseteile durch einen Dichtring 64 abgedichtet.

Das Durchflußmengen-Regelventil läßt sich beispielsweise für Druckbereiche von 4 ± 1 bar und 5 ± 1 bar auslegen. Andere Druckbereiche bzw. Durchflußmengen lassen sich durch entsprechende Änderungen der Membranbohrung realisieren.

## Patentansprüche

1. Anordnung zur Durchflußmengenregelung und zum Öffnen eines Durchflußkanals für unter Druck stehende Flüssigkeiten, insbesondere karbonisiertes Wasser, bestehend aus einem durch eine Betätigungseinrichtung (9) steuerbaren Auslaß-Absperrventil (2) und einem einen konstanten Durchfluß unabhängig vom Druck der zugeführten Flüssigkeit steuernden Durchflußmengen-Regelventil (3), innerhalb eines Gehäuses (1) mit einem ersten, zweiten und dritten Gehäuseteil (11, 12, 13), die in Durchflußrichtung unmittelbar aufeinanderfolgend angeordnet sind, wobei das zweite der drei Gehäuseteile sowohl einen Bestandteil des Auslaß-Ansperrventils (2) als auch einen Bestandtel des Durchflußmengen-Regelventils (3) bildet und den Durchflußkanal zwischen Auslaß-Absperrventil (2) und Durchflußmengen-Regelventil aufweist, **dadurch gekennzeichnet,** daß das Auslaß-Ansperrventil (2) durch das erste und zweite Gehäuseteil (11, 12) sowie durch die Betätigungseinrichtung (9) gebildet ist, die aus einer zwischen beiden Gehäuseteilen (11, 12) sandwichartig eingespannte Klappe (91) mit einem Verschlußteil (911) und einem mit der Klappe (91) verbundenen Betätigungshebel (92) besteht, daß in das zweite Gehäuseteil (12) ein mit dem Verschlußteil (911) der Klappe (91) zusammenwirkender Ventilsitz (123) integriert ist, daß zwischen dem zweiten und dritten Gehäuseteil (12, 13) senkrecht zu der Richtung des zufließenden Wassers eine Membrane (4) mit einer Bohrung (41) eingespannt ist, und daß im dritten Gehäuseteil (13) im Bereich der Membranbohrung (41) ein Stift (5) in der Weise angeordnet ist, daß in das zweite Gehäuseteil (12) einströmendes Wasser durch die Bohrung (41) der Membrane (4) tritt und diese in Richtung des Stifts (5) drückt.

2. Anordnung nach Anspruch 1, dadurch gekennzeichnet, daß das Verschlußteil (911) der Klappe (91) im Bereich des Durchflußweges auf der dem zufließenden Wasser zugewandten Seite ballenförmig ausgebildet ist.

3. Anordnung nach Anspruch 2, dadurch gekennzeichnet, daß die Klappe (91) mit dem Verschlußteil (911) innerhalb eines zwischen dem ersten und zweiten Gehäuseteil (11, 12) eingespannten Rings (93) angeordnet ist und aus einem radial verlaufenden Steg (912) besteht, der an einer Seite mit dem Ring (93) verbunden ist und sich bis zu dem im Bereich des Durchflußkanals, im Mittelpunkt des Rings (93) angeordneten Verschlußteil (911) erstreckt.

4. Anordnung nach Anspruch 3, dadurch gekennzeichnet, daß der Betätigungshebel (92) in Verlängerung des Stegs (912) mit dem Ring (93) verbunden ist.

5. Anordnung nach Anspruch 4, dadurch gekennzeichnet, daß daß das dritte Gehäuseteil (13) ein Auflager (131) aufweist, gegen das die Membrane (4) bei einem vorgegebenen Druck des einströmenden Wassers drückt.

6. Anordnung nach einem der Ansprüche 1 oder 5, dadurch gekennzeichnet, daß der Stift (5) senkrecht zur Membrane (4) verstellbar gelagert ist.

7. Anordnung nach Anspruch 6, dadurch gekennzeichnet, daß der Stift (5) als justierbare Schraube ausgebildet ist.

8. Anordnung nach Anspruch 7, dadurch gekennzeichnet, daß daß der Stift (5) einen die Verstellbewegung in Richtung der Membrane (4) begrenzenden Anschlag (51) aufweist.

9. Anordnung nach einem der Ansprüche 1 bis 8, dadurch gekennzeichnet, daß der Stift (5) im Bereich der Bohrung (41) der Membrane (4) eine kegelförmige Spitze (52) aufweist.

10. Anordnung nach Anspruch 9, dadurch gekennzeichnet, daß die kegelförmige Spitze (52) einen Winkel von 90° aufweist.

11. Anordnung nach einem der Ansprüche 1 bis 10, dadurch gekennzeichnet, daß die Membrane (4) kreisförmig ausgebildet ist und daß die Bohrung (41) zentral in der Membrane (4) angeordnet ist.

12. Anordnung nach Anspruch 11, dadurch gekennzeichnet, daß die Membrane (4) in einem vorgegebenen Abstand von ihrer kreisförmigen Außenkante kreislinienförmig gelagert ist.

13. Anordnung nach einem der Ansprüche 5 bis 12, dadurch gekennzeichnet, daß das dritte Gehäuseteil (13) eine Auslaßöffnung (133) aufweist, die in ein Auslaßrohr (134) mündet.

14. Anordnung nach Anspruch 13, dadurch gekennzeichnet, daß das Auslaßrohr (134) seitlich versetzt und parallel zur Zuflußrichtung des Wassers angeordnet ist.

15. Anordnung nach Anspruch 13, dadurch gekennzeichnet, daß das Auslaßrohr (134) gegenüber der Zuflußrichtung des Wassers um 90° abgewinkelt ist.

16. Anordnung nach einem der Ansprüche 13 bis 15, dadurch gekennzeichnet, daß die Auslaßöffnung (133) in ein Auslaßrohr (134) mit einem gegenüber der Auslaßöffnung (133) größeren Durchmesser mündet.

17. Anordnung nach einem der Ansprüche 1 bis 16, dadurch gekennzeichnet, daß das Auslaßrohr (134) in das dritte Gehäuseteil (13) integriert ist.

## Claims

1. Arrangement for the regulation of quantity of throughflow and for the opening of a throughflow channel for liquids standing under pressure, in particular carbonated water, consisting of an outlet shut-off valve (2) controllable by an actuating equipment (9) and a throughflow-quantity regulating valve (3) controlling a constant throughflow independently of the pressure of the supplied liquid, within a housing (1) with a first, a second and a third housing part (11, 12, 13), which are arranged one following the other directly in the direction of throughflow, wherein the second of the three housing parts forms a component of the outlet shut-off valve (2) as well as also a component of the throughflow-quantity regulating valve (3) and comprises the throughflow channel between the outlet shut-off valve (2) and the throughflow-quantity regulating valve (3), characterised thereby, that the outlet shut-off valve (2) is formed by the first and the second housing part (11, 12) as well as by the actuating equipment (9), which consists of a flap (91), which is clamped in the manner of a sandwich between both the housing parts, with a closure part (911) and an actuating lever (92) connected with the flap (91), that a valve seat (123) co-operating with the closure part (911) of the flap (91) is integrated into the second housing part (12), that a diaphragm (4) with a bore (41) is clamped perpendicularly to the direction of the inflowing water between the second and the third housing part (12, 13) and that a pin (5) is arranged in the region of the diaphragm bore (41) in the third housing part (13) in such a manner that water flowing into the second housing part (12) passes through the bore (41) of the diaphragm (4) and urges this in the direction of the pin (5).

2. Arrangement according to claim 1, characterised thereby, that the closure part (911) of the flap (91) is formed to be barrel-shaped on the side facing the inflowing water in the region of the throughflow path.

3. Arrangement according to claim 2, characterised thereby, that the flap (91) with the closure part (911) is arranged within a ring (93), which is clamped in between the first and the second housing part (11, 12), and consists of a radially extending web (912), which is connected at one side with the ring (93) and extends to the closure part (911) arranged in the centre of the ring (93) in the region of the throughflow channel.

4. Arrangement according to claim 3, characterised thereby, that the actuating lever (92) is connected with the ring (93) in prolongation of the web (912).

5. Arrangement according to claim 4, characterised thereby, that the third housing part (13) displays a bearing surface (131), against which the diaphragm (4) presses in the case of a preset pressure of the inflowing water.

6. Arrangement according to one of the claims 1 and 5, characterised thereby, that the pin (5) is borne to be adjustable perpendicularly to the diaphragm (4).

7. Arrangement according to claim 6, characterised thereby, that the pin (5) is constructed as adjustable screw.

8. Arrangement according to claim 7, characterised thereby, that the pin (5) displays an abutment (51) limiting the adjusting movement in the direction of the diaphragm (4).

9. Arrangement according to one of the claims 1 to 8, characterised thereby, that the pin (5) displays a conical tip (52) in the region of the bore (41) of the diaphragm (4).

10. Arrangement according to claim 9, characterised thereby, that the conical tip (52) displays an angle of 90°.

11. Arrangement according to one of the claims 1 to 10, characterised thereby, that the diaphragm (4) is formed in circular shape and that the bore (41) is arranged centrally in the diaphragm (4).

12. Arrangement according to claim 11, characterised thereby, that the diaphragm (4) is borne on a circular line at a preset spacing from its circular outer edge.

13. Arrangement according to one of the claims 5 to 12, characterised thereby, that the third housing part (13) displays an outlet opening (133), which opens into an outlet pipe (134).

14. Arrangement according to claim 13, characterised thereby, that the outlet pipe (134) is arranged laterally displaced of and parallelly to the direction of inflow of the water.

15. Arrangement according to claim 13, characterised thereby, that the outlet pipe (134) is bent-over through 90° relative to the direction of inflow of the water.

16. Arrangement according to one of the claims 13 to 15, characterised thereby, that the outlet opening (133) opens into an outlet pipe (134) of a diameter which is greater than that of the outlet opening (133).

17. Arrangement according to one of the claims 1 to 16, characterised thereby, that the outlet pipe (134) is integrated into the third housing part (13).

## Revendications

1. Agencement de régulation de débit et d'ouverture d'un canal de passage pour des liquides sous pression, en particulier d'eau carbonatée, comprenant une valve d'arrêt de sortie (2) commandée par un dispositif d'actionnement (9) et une valve de régulation de débit (3) commandant un débit constant indépendamment de la pression du liquide admis, à l'intérieur d'un corps (1) comprenant une première, une deuxième et une troisième parties de corps (11, 12, 13) disposées dans le sens de passage directement les unes à la suite des autres, les deuxième et troisième parties de corps étant une partie constitutive de la valve d'arrêt de sortie (2) et une partie constitutive de la valve de régulation de débit (3) et définissant le canal de passage entre la valve d'arrêt de sortie (2) et la valve de régulation de débit, caractérisé par le fait que la valve d'arrêt de sortie (2) est formée par la première et la deuxième parties de corps (11, 12) ainsi que par le dispositif d'actionnement (9) qui se compose d'un clapet (91) avec partie d' obturation (911), serré en sandwich entre les deux parties de corps (11, 12) , et d'un levier d' actionnement (92) relié au clapet (91), qu'un siège de valve (123) coopérant avec la partie d'obturation (911) du clapet (91) est intégré à la deuxième partie de corps (12), qu'une membrane (4) avec un trou (41) est serrée entre la deuxième partie de corps (12) et la troisième partie de corps (13), perpendiculairement à la direction d'admission d'eau, et qu'une tige (5) est disposée dans la troisième partie de corps (13), dans la zone du trou (41) de la membrane, de telle manière que l'eau pénétrant dans la deuxième partie de corps (12) traverse le trou (41) de la membrane et pousse cette dernière en direction de la tige (5).

2. Agencement suivant la revendication 1, caractérisé par le fait que la partie d'obturation (911) du clapet (91) est réalisée avec une forme bombée dans la zone du trajet de passage, sur le côté tourné vers l'admission d'eau.

3. Agencement suivant la revendication 1, caractérisé par le fait que le clapet (91), avec la partie d'obturation (911), est disposé à l'intérieur d'un anneau (93) serré entre la première partie de corps (11) et la deuxième partie de corps (12) et comprend une barrette radiale (912) qui est reliée sur un côté à l'anneau (92) et s'étend vers la partie d'obturation (911) disposée dans la zone du canal de passage, au centrè de l'anneau (93).

4. Agencement suivant la revendication 3, caractérisé par le fait que le levier d'actionnement (92) est relié à l'anneau (93) dans le prolongement de la barrette (912).

5. Agencement suivant la revendication 4, caractérisé par le fait que la troisième partie de corps (13) forme une portée (131) contre laquelle la membrane (4) s'appuie sous une pression prédéterminée de l'eau.

6. Agencement suivant l'une des revendications 1 ou 5, caractérisé par le fait que la tige (5) est montée de façon réglable perpendiculairement à la membrane (4).

7. Agencement suivant la revendication 6, caractérisé par le fait que la tige (5) est réalisée sous forme de vis réglable.

8. Agencement suivant la revendication 7, caractérisé par le fait que la tige (5) présente une butée (51) limitant le mouvement de réglage en direction de la membrane (4).

9. Agencement suivant l'une des revendications 1 à 8, caractérisé par le fait que la tige (5) présente une pointe conique (52) dans la zone du trou (41) de la membrane (4).

10. Agencement suivant la revendication 9, caractérisé par le fait que la pointe conique (52) présente un angle de 90°.

11. Agencement suivant l'une des revendications 1 à 10, caractérisé par le fait que la membrane (4) est de forme circulaire et que le trou (41) est disposé au centre de la membrane (4).

12. Agencement suivant la revendication 11, caractérisé par le fait que la membrane (4) est montée suivant une ligne circulaire à une distance prédéterminée de son bord extérieur circulaire.

13. Agencement suivant l'une des revendications 5 à 12, caractérisé par le fait que la troisième partie de corps (13) présente une ouverture de sortie (133) qui débouche dans un tube de sortie (134).

14. Agencement suivant la revendication 13, caractérisé par le fait que le tube de sortie (134) est décalé latéralement et est disposé parallèlement à la direction d'admission de l'eau.

15. Agencement suivant la revendication 13, caractérisé par le fait que le tube de sortie (134) fait un angle de 90° par rapport à la direction d'admission de l'eau.

16. Agencement suivant l'une des revendications 13 à 15, caractérisé par le fait que l'ouverture de sortie (133) débouche dans un tube de sortie (134) ayant un plus grand diamètre que l'ouverture de sortie (133).

17. Agencement suivant l'une des revendications 1 à 16, caractérisé par le fait que le tube de sortie (134) est intégré à la troisième partie de corps (13).
